# EUROPÄISCHE PATENTSCHRIFT

(11) **EP 2 285 627 B1**
(45) Veröffentlichungstag und Bekanntmachung des Hinweises auf die Patenterteilung: **26.10.2011**
(21) Anmeldenummer: 09757116.0
(22) Anmeldetag: 03.06.2009
(51) Int. Cl.: B60R 13/04, B60J 10/00

(54) **VERFAHREN ZUR ANORDNUNG UND BEFESTIGUNG EINER ZIERLEISTE IM BEREICH EINES FENSTERS EINES KRAFTFAHRZEUGS**
METHOD FOR ARRANGING AND FASTENING A DECORATIVE STRIP IN THE REGION OF A MOTOR VEHICLE WINDOW
PROCÉDÉ D'AGENCEMENT ET DE FIXATION D'UNE BAGUETTE ENJOLIVEUSE DANS LA ZONE D'UNE VITRE DE VÉHICULE À MOTEUR

(30) Priorität: 05.06.2008 DE 102008026923
(43) Veröffentlichungstag der Anmeldung: 23.02.2011
(73) Patentinhaber: Henniges Automotive GmbH & Co. KG, 31547 Rehburg Loccum (DE)
(72) Erfinder: KREYE, Bernhard, 31515 Wunstorf (DE)
(74) Vertreter: Jabbusch, Matthias
(86) Internationale Anmeldenummer: PCT/DE2009/000766
(87) Internationale Veröffentlichungsnummer: WO 2009/146682

(56) Entgegenhaltungen:
- EP-A- 0 863 053
- DE-A1- 19 730 095
- DE-A1-102004 035 680
- DE-B3-102006 002 556

## Beschreibung

Die Erfindung betrifft ein Verfahren zur Anordnung und Befestigung einer Zierleiste im Bereich eines Fensters eines Kraftfahrzeugs, bei dem die Zierleiste mit einem als Zierleistenträger dienenden Profil verbunden wird und anschließend das derart vorbereitete Profilteil mit einem im Bereich des Fensters ortsfest angeordneten Verbindungsprofil verbunden wird.

Es ist bereits vorgeschlagen worden, Zierleisten mit einem als Zierleistenträger dienenden Profilteil zu verbinden und daß so vorbereitete Profilteil anschließend mit einem im Bereich des Fensters, entweder an der Karosserie oder an der Fensterscheibe aus Glas befestigten Verbindungsprofil zu verbinden.

Die Befestigung des Verbindungsprofils kann dabei z.B. mittels Verkleben, Verrasten mit vorher angebrachten Clips, Druckknöpfen, Klammern und dergleichen Hilfsmitteln verwirklicht werden.

Zierleisten sind zumeist Profilschienen aus Metall, z.B. Stahlblech oder Aluminium, mit einer Materialstärke von ca. 1 mm. Die Zierleisten sind aus metallischem Werkstoff gestanzt, geprägt, gewalzt oder gezogen und an der sichtseitigen Oberfläche zumeist poliert oder auch verchromt.

Die Verbindung der bekannten Zierleisten mit einem die Zierleisten tragenden Basisteil, z.B. dem als Profilträger vorgeschlagenen Profilteil, erfolgt ebenfalls durch Kleber oder Verrasten, wobei mehr oder weniger aufwendige Montagevorgänge abzuwickeln sind, insbesondere auch zur Anbringung von vorgefertigten Clipsen, Klammern oder Steckern und dergleichen Befestigungsmitteln aus z.B. Kunststoff.

Ein gattungsbildendes Verfahren ist aus der DE 10 2004 035 680 A1 bekannt.

Der Erfindung liegt die Aufgabe zugrunde, eine Zierleiste im Bereich eines Fensters ohne zusätzliche Befestigungsmittel wie Kleber, Clipse, Klammern und dergleichen anzuordnen und zu befestigen.

Diese Aufgabe ist erfindungsgemäß durch die Maßnahmen gemäß dem Patentanspruch 1 gelöst.

Weiterbildungen und vorteilhafte Ausgestaltungen ergeben sich aus den Ansprüchen 2 und 3.

Dadurch, daß als Werkstoff für das als Zierleistenträger eingesetzte Profilteil ein weichelastisches Material wie z.B. TPE, Weich-PVC, PU oder Gummi mit einer Härte von 30 bis 90 Shore A verwendet wird, läßt sich der Fußbereich des daraus geformten Profilteils mit entsprechendem Kraftaufwand in eine Aufnahme der Zierleiste quetschen, womit die Verbindung hergestellt ist. Die Aufnahme befindet sich an der sichtseitigen Oberfläche der Zierleiste abgekehrten Unterseite und kann z.B. dadurch gebildet sein, daß die Längsränder eines Metallstreifens, der für die Zierleiste verwendet wird, nach innen gegen die Unterseite mehr oder weniger umgebogen werden, sodaß an den Längsrändern des als Zierleiste eingesetzten Metallstreifens in etwa Hinterschneidungen ähnliche Kanten vorhanden sind, welche die Aufnahme begrenzen.

Dadurch ist unter den umgebogenen Längsrändern ein Aufnahme-Raum vorhanden, der begrenzt wird von der Unterseitenfläche der Zierleiste, welche ihrer sichtseitigen Oberfläche abgekehrt ist, und den zurückgebogenen Längsrändern der Zierleiste.

Selbstverständlich ist es auch möglich, durch andere Maßnahmen eine entsprechende Aufnahme an der Unterseite einer Zierleiste auszubilden. So kann z.B. die Zierleiste auch ein aus Aluminium extrudiertes Kammerprofil sein, bei der eine nach außen offene Kammer die Funktion der Aufnahme erfüllen kann.

Das Profilteil hat eine Querschnittsform, bei der ein Fußbereich vorhanden ist, der eine z.B. etwa pilzkopfartige Form aufweist.

Dieser pilzkopfförmige Fußbereich läßt sich erfindungsgemäß mit entsprechender Druckkraft in die enge Aufnahme quetschen, wodurch das Profilteil und die Zierleiste miteinander verbunden sind. Das Profilteil kann bereichsweise nacheinander mit der Druckkraft beaufschlagt werden, sodaß das weichelastische Profilteil mit der Aufnahme bzw. letztendlich mit der Zierleiste nahezu "verknüpft" wird.

Das Formteil wird mit seinem Fußbereich praktisch in die Aufnahme der Zierleiste "hineingerollt", wobei dazu auch eine von außen führbare und dabei gegen das Profilteil drückbare Rolle benutzt werden könnte.

Durch die Quetschung des weichelastischen Fußbereiches verformt sich dieser Abschnitt des Profilteils soweit, daß er in die Aufnahme der Zierleiste einfügbar ist. Sobald der Quetschdruck aufgehoben ist, springt der verformte Fußbereich in seine ursprüngliche Form elastisch zurück und ist hinter den vorspringenden Längsrändern der Zierleiste, welche die Aufnahme begrenzen, eingeschnappt und verriegelt bzw. festgesetzt.

Die Zierleiste ist dadurch mit dem Profilteil ohne zusätzliche Hilfsmittel verbunden. Profilteil und Zierleiste bilden eine Baueinheit, die weiterer Verwendung zugeführt werden kann.

Diese weitere Verwendung besteht darin, daß die erfindungsgemäße Baueinheit aus Zierleiste und Profilteil, anschließend mittels eines Verbindungsprofils im Bereich eines Fensters angeordnet und befestigt wird.

Dies erfolgt dadurch, daß an dem Profilteil neben der Anformung seines Fußbereichs auch noch eine Anformung eines Kopfbereichs angeordnet ist. Der Kopfbereich kann ebenfalls pilzkopfartige Querschnittsform aufweisen, womit der Kopfbereich mit dem Verbindungsprofil auch wieder formschlüssig verrastbar ist. Dazu weist das Verbindungsprofil entsprechende Vertiefungen auf, in welche der Kopfbereich gefügt und damit verrastet werden kann.

Das Fügen des Kopfbereiches in die zugeordnete Vertiefung ist ebenfalls ein Vorgang, bei den mit Quetschdrücken gearbeitet wird, mit der Wirkung, daß der in die Vertiefung eingefügte Kopfbereich des Profilteils anschließend kaum noch verformbar ist, weil er durch den quetschenden Haltedruck, der sowohl auf seinen Fußbereich als auch gleichzeitig auf seinen Kopfbereich wirkt, nahezu fest und unverformbar geworden ist, zumal die einfassenden Oberflächen der Aufnahme der Zierleiste und der Vertiefung des Verbindungsprofils durch ihre Funktion, auch ein Widerlager für die Druckkräfte zu bilden eine weitere Zusammenquetschung des Materials des Profilteils behindern dürften.

Die Fähigkeit des Materials, bei Quetschverformung ausweichen zu können, vermindert sich proportional zum wachsenden Quetschdruck während der Zusammenfügung der Bauteile. Das ist auch bei der Befestigung der Zierleiste an dem Profilteil der Fall.

Um die aufzuwendenden Druckkräfte für die Quetschungen nicht zu groß werden zu lassen, ist nach einer vorteilhaften Weiterbildung vorgesehen, daß in die Außenflächen des Profilteils, insbesondere in die Außenflächen von Fußbereich und Kopfbereich des Profilteils, Ausnehmungen eingeformt werden, durch welche ihre Quetschverformbarkeit gesteigert wird.

Das quetschverformte Material kann sich in die jeweilige Ausnehmung hinein verformen, wobei innerer Quetschdruck, der eine weitere Verformung behindern könnte, teilweise wieder abgebaut werden kann.

Für z.B. ein Recyclingverfahren, ist die erfindungsgemäß befestigte Zierleiste mit besonderem Vorteil auch nur dann demontierbar, wenn der Quetschdruck auf den Kopfbereich des Profilteils aufgehoben wird. Dies kann dadurch erfolgen, daß der Kopfbereich des Profilteils aus der Vertiefung im Verbindungsprofil herausgezogen wird. Danach läßt sich die Zierleiste aus dem nunmehr wieder als frei handhabbare Baueinheit vorliegenden Profilteil mit verhältnismäßig geringem Aufwand herausschälen.

Ein Ausführungsbeispiel, aus dem sich weitere erfinderische Merkmale ergeben, ist in der Zeichnung dargestellt. Es zeigen:
- Fig. 1:: eine schematische Seitenansicht eines Fensterbereichs eines Kraftfahrzeugs im Schnitt,
- Fig. 2:: eine Seitenansicht einer aus Profilteil und daran befestigter Zierleiste bestehenden Baueinheit und
- Fig. 3:: eine schematische seitliche Ansicht der Zierleiste im Moment der Zusammenfügung bzw. Verbindung mit einem Profilteil zur Bildung der Baueinheit gemäß Fig. 2.

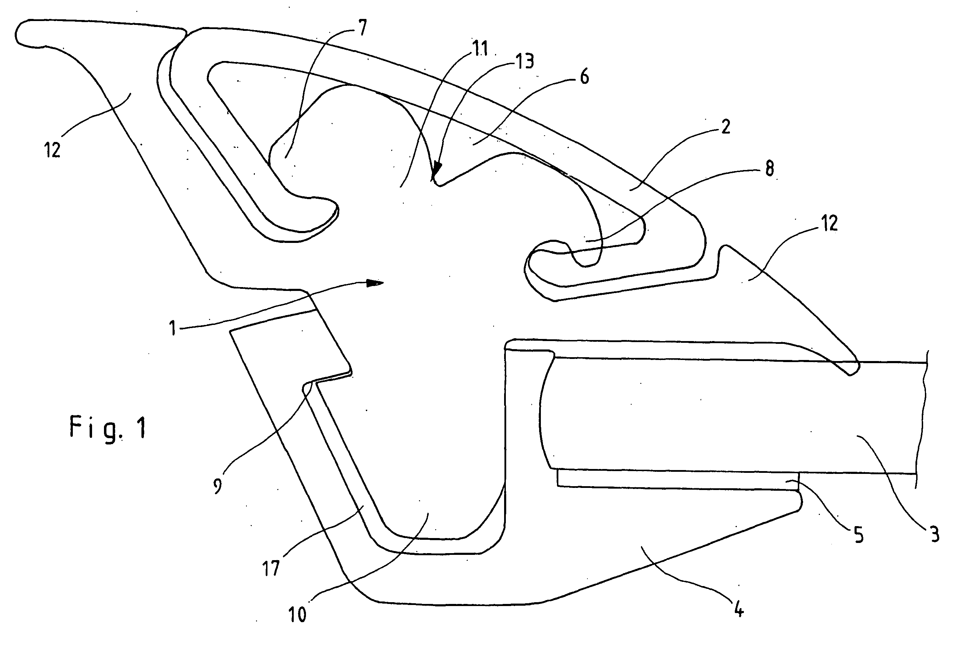

Fig. 1 zeigt in einer schematischen Seitenansicht einen Rand eines Fensterbereichs eines Fensterbereichs eines Kraftfahrzeugs. Eine Glasscheibe des Fensters ist mit 3 bezeichnet. Mit Kleber 5 ist ein Rahmenprofil 4 aus relativ hartem Werkstoff an die Fensterscheibe 3 aus Glas geklebt.

Das Verbindungsprofil 4 weist eine eingeformte Vertiefung 17 auf, und hat im Bereich des oberen Öffnungsrandes eine angeformte Rastnase 9.

Das Profilteil 1 ist separat aus weichelastischem Material mit einer Härte von 30 bis 90 Shore A gefertigt. Das Profilteil 1 weist einen Kopfbereich 10 auf, der in die Vertiefung 17 eindrückbar und mit der Rastnase 9 verrastbar ist.

Mit einem Fußbereich 11, der durch seitliche Rastnasen 7 und 8 begrenzt ist, ist das Profilteil 1 in die Aufnahme 6 an der Unterseite einer Zierleiste 2 aus Metall gedrückt. Durch das Eindrücken in die Aufnahme 6 verformen sich die Rastnasen 7 und 8 aufgrund des einwirkenden Quetschdruckes bis der Fußbereich 11 in die Aufnahme schnappt.

Mit 12 sind seitliche Ausgleichslippen des Profilteils 1 bezeichnet.

In die Außenfläche des Fußbereichs 11 ist die hier mit 13 bezeichnete Ausnehmung eingeformt, welche die Quetschverformbarkeit des Profilteils 1 steigert.

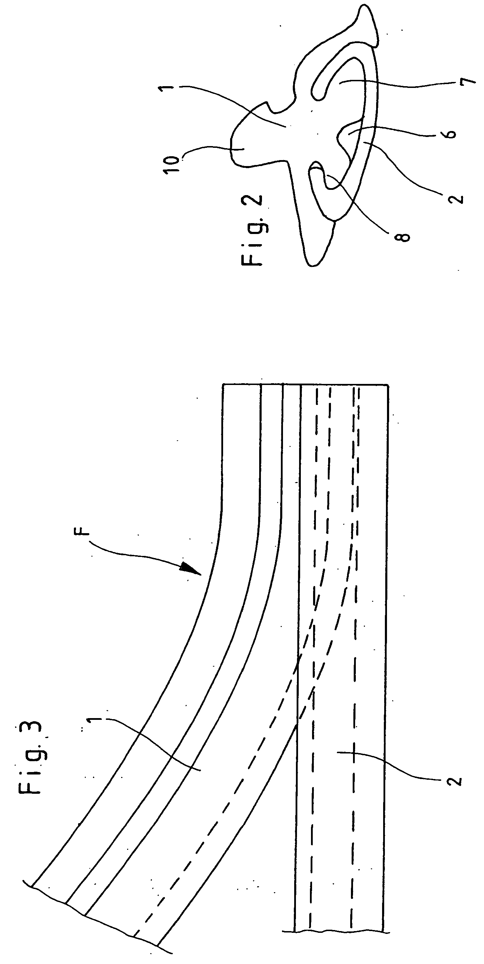

Fig. 2 zeigt eine durch Zusammenfügung von Zierleiste 2 und Profilteil 1 gebildete Baueinheit. Gleiche Bauteile sind mit gleichen Bezugszahlen wie in Fig. 1 bezeichnet.

Fig. 3 zeigt eine schematische Seitenansicht und verdeutlicht, wie das Profilteil 1 mit dem Zierprofil 2 verknüpft wird, indem mit der Kraft F das Formteil 1 im Einknüpfbereich belastet wird.

Sobald daß die aus derart zusammengefügtem Profilteil 1 und Zierleiste 2 gebildete Baueinheit vorliegt, kann die Anordnung und Befestigung vorgenommen werden, wie es in Fig. 1 dargestellt ist.

## Patentansprüche

1. Verfahren zur Anordnung und Befestigung einer Zierleiste (2) im Bereich eines Fensters eines Kraftfahrzeuges, bei dem die Zierleiste mit einem als Zierleistenträger dienenden Profilteil (1) verbunden wird und anschließend das derart vorbereitete Profilteil mit einem an einer Glasscheibe (3) des Fensters
ortsfest angeordneten Verbindungsprofil (4) verbunden wird,
**dadurch gekennzeichnet,**
**daß** als Werkstoff für das Profilteil (1) ein weichelastisches Material verwendet wird,
**daß** ein vorstehender Fußbereich (11) des Profilteils (1) mit Druckkraft von außen beaufschlagt und unter Verformung seiner Außenkontur in eine enge Aufnahme (6) der Zierleiste (2) gequetscht wird, die sich an der der Sichtseite abgekehrten Unterseite der Zierleiste (2) befindet,
und **daß** danach die Druckkraftbeaufschlagung aufgehoben und der aus der Aufnahme (6) vorstehende Kopfbereich des Profilteils (1) in eine Vertiefung (17) des Verbindungsprofils (4) eingefügt und damit formschlüssig verrastet wird.

2. Verfahren nach Anspruch 1, **dadurch gekennzeichnet, daß** als Werkstoff für das Profilteil (1) Kunststoffmaterial mit einer Härte von 30 bis 90 Shore A verwendet wird.

3. Verfahren nach einem der Ansprüche 1 und 2, **dadurch gekennzeichnet, daß** in die Außenfläche des Profilteils (1), insbesondere in die Außenflächen von Fußbereich (11) und Kopfbereich (10) des Profilteils (1) Ausnehmungen (13) eingeformt werden, durch welche ihre Quetschverformbarkeit gesteigert wird.

## Claims

1. Method for arranging and fastening a trim strip (2) in the region of a window of a motor vehicle, in which the trim strip is connected to a profile part (1) which acts as a trim strip support and then the profile part prepared in this manner is connected to a connecting profile (4) which is arranged in a stationary manner on a glass pane (3) of the window,
**characterised in that**
a flexible material is used as the material for the profile part (1),
that a projecting foot region (11) of the profile part (1) is loaded with pressure from outside and compressed with deformation of the outer contour thereof into a narrow receptacle (6) in the trim strip (2), which is situated on the underside of the trim strip (2) which faces away from the visible side,
and that the pressure is then released and the head region of the profile part (1) which projects out of the receptacle (6) is inserted into a depression (17) in the connecting profile (4) and thus locked in a form-fitting manner.

2. Method according to Claim 1, **characterised in that** a plastic material with a hardness of from 30 to 90 Shore A is used as the material for the profile part (1).

3. Method according to one of Claims 1 and 2, **characterised in that** recesses (13) are formed in the outer face of the profile part (1), in particular in the outer faces of the foot region (11) and head region (10) of the profile part (1), by means of which recesses the compression deformability thereof is increased.

## Revendications

1. Procédé pour disposer et fixer une baguette décorative (2) dans la zone d'une fenêtre d'un véhicule automobile, dans lequel on relie la baguette décorative avec une élément profilé (1) servant de support de baguette décorative et on relie ensuite l'élément profilé préparé de la sorte avec un profilé de liaison (4) disposé de façon stationnaire sur une vitre en verre (3) de la fenêtre,
**caractérisé en ce qu'**
on utilise en tant que matériau pour l'élément profilé (1) une matière élastique souple,
**en ce qu'**on soumet par l'extérieur une zone inférieure (11) saillante de l'élément profilé (1) à une pression et **en ce qu'**en déformant son contour extérieur, on l'écrase dans un logement (6) étroit de la baguette décorative (2) qui se trouve sur la face inférieure opposée à la face visible de la baguette décorative (2),
et **en ce qu'**ensuite on annule l'application de pression et on insère la zone de tête de l'élément profilé (1) saillant du logement (6) dans un renfoncement (17) du profilé de liaison (4) et on l'enclenche de ce fait par complémentarité de forme.

2. Procédé selon la revendication 1, **caractérisé en ce qu'**en tant que matériau pour l'élément profilé (1) on utilise de la matière plastique d'une dureté de 30 à 90 shore A.

3. Procédé selon l'une quelconque des revendications 1 et 2, **caractérisé en ce que** dans la surface extérieure de l'élément profilé (1), notamment dans les surfaces extérieures de la zone inférieure (11) et de la zone supérieure (10) de l'élément profilé (1) on forme des évidements (13), qui ont pour effet d'augmenter leur déformabilité par écrasement.
